# EUROPEAN PATENT SPECIFICATION

(11) **EP 2 470 401 B1**
(45) Date of publication and mention of the grant of the patent: **29.01.2014**
(21) Application number: 09782315.7
(22) Date of filing: 28.08.2009
(51) Int. Cl.: B60S 1/38

(54) **A WINDSCREEN WIPER DEVICE**
SCHEIBENWISCHERVORRICHTUNG
DISPOSITIF D'ESSUIE-GLACE

(43) Date of publication of application: 04.07.2012
(73) Proprietor: Federal-Mogul S.A., 6790 Aubange (BE)
(72) Inventor: BOLAND, Xavier, B-6700 Arlon (BE)
(74) Representative: Hooiveld, Arjen Jan Winfried
(86) International application number: PCT/EP2009/061115
(87) International publication number: WO 2011/023235

(56) References cited:
- EP-A1- 1 627 787
- EP-A1- 2 042 394
- DE-A1-102006 020 524

## Description

The present invention relates to a windscreen wiper device comprising an elastic, elongated carrier element, as well as an elongated wiper blade to be placed in abutment with a windscreen to be wiped, said wiper blade comprising an elongated upper part and an elongated lower wiping part of a flexible material, wherein said upper part is provided with retention means for retaining said lower wiping part, wherein said windscreen wiper device further comprises a spoiler at a side of said upper part facing away from said lower wiping part, wherein a longitudinal groove for inserting a longitudinal strip of said carrier element therein is defined between said upper part and said spoiler, which windscreen wiper device further comprises a connecting device for an oscillating arm, wherein said oscillating arm is pivotally connected to said connecting device about a pivot axis near one end thereof.

Such a windscreen wiper device, which is also called a flat blade and is generally known. No use therein is made of several yokes pivotally connected to each other, like in traditional wiper blades, but the wiper blade is biased by a carrier element, as a result of which it exhibits a specific curvature. The longitudinal strip is also called "vertebra" or "flexor", whereas the spoiler is also called an air-deflector.

A drawback of the prior art windscreen wiper device is that the entity consisting of the upper part and the spoiler is too rigid, wherein the rigidity may often vary with temperature. As a consequence thereof, the pressure distribution of the wiper blade relative to the windscreen to be wiped is adversely affected, with all negative effects on the wiping quality involved. Further, the shape of the upper part together with the spoiler varies during its lifetime (for example, having a large curvature in case it is not in contact with the windscreen to be wiped, having a normal curvature in case it is in contact with the windscreen to be wiped, and having no curvature at all when packaged), again adversely affecting the above-mentioned pressure distribution. The variation in shape may also cause creep of the material of the upper part and thus variation of the pressure distribution.

EP-A-1627787 shows the preamble of claims 1 and 8. It is an object of the invention to improve the prior art, that is to improve the known windscreen wiper device, wherein a constant pressure distribution of the wiper blade relative to the windscreen to be wiped and thus a constant wiping quality is achieved.

In order to accomplish that objective, a windscreen wiper device of the kind referred to in the introduction is characterized according to the invention in that said upper part is more rigid than at least one wall of said groove. The larger rigidity of the said upper part may be realized by reinforcing said upper part with a rigid insert, for example a metal insert. Such an insert is preferably provided inside said upper part through co-extrusion. In the alternative or in addition thereto, the larger rigidity of said upper part may be obtained by selecting a more rigid material for manufacturing said upper part.The semi-rigidity of at least one wall of said groove must ensure that on the one hand a bending of said wall in lateral and outward direction is made possible upon mounting of said longitudinal strip into said longitudinal groove, and on the other hand a reliable and solid retention of said longitudinal strip in said longitudinal groove as defined by said wall is made possible.

Particularly, said first material and said third material are identical. More in particular, said spoiler is made from a fourth material, wherein said second material and said fourth material are identical.

It is noted that the invention is not restricted to use with passenger cars, but it can also be used with trains and other fast vehicles.

In one preferred embodiment of a windscreen wiper device in accordance with the invention said at least one wall and said spoiler are particularly made in one piece of (preferably) thermoplastic material.

In another preferred embodiment of a windscreen wiper device in accordance with the invention said at least one wall has an at least substantially C-shaped cross-section. In the alternative, said upper part is more rigid than at least two opposite walls of said groove.

In another preferred embodiment of a windscreen wiper device according to the invention said upper part, said at least one wall and said spoiler are made by co-extrusion.

The invention also relates to a method for manufacturing a windscreen wiper device comprising an elastic, elongated carrier element, as well as an elongated wiper blade to be placed in abutment with a windscreen to be wiped, said wiper blade comprising an elongated upper part and an elongated lower wiping part of a flexible material, wherein said upper part is provided with retention means for retaining said lower wiping part, wherein said windscreen wiper device further comprises a spoiler at a side of said upper part facing away from said lower wiping part, wherein a longitudinal groove for inserting a longitudinal strip of said carrier element therein is defined between said upper part and said spoiler, which windscreen wiper device further comprises a connecting device for an oscillating arm, wherein said oscillating arm is pivotally connected to said connecting device about a pivot axis near one end thereof, characterized in that said upper part is made more rigid than at least one wall of said groove and said upper part is made from a first material, wherein said at least one wall comprises a part from a second material facing towards said upper part and a part from a third material facing away from said upper part, wherein said first material is more rigid than said second material, and wherein said third material is more rigid than said second material.

The invention will now be explained in more detail with reference to figures illustrated in a drawing, wherein:
- figure 1 shows a perspective view of a windscreen wiper device according to an embodiment not claimed.
- figures 2, 3 and 4 are a cross-section (partly seen in perspective) of the windscreen wiper device of figure 1 according to different embodiments, respectively.

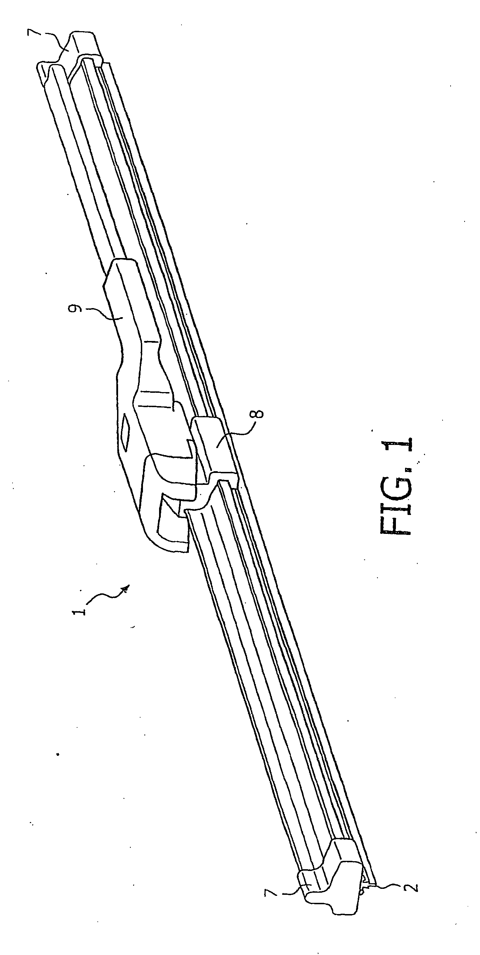

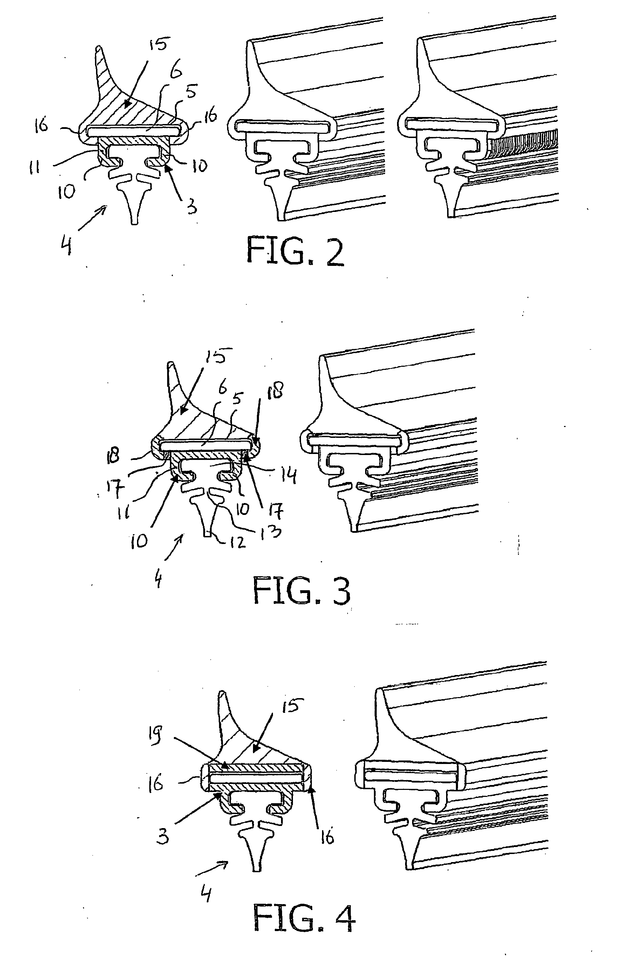

Figure 1 shows a variant not claimed of a windscreen wiper device 1. Said windscreen wiper device 1 is built up of a wiper blade 2 consisting of a plastic elongated upper part 3 and an elastomeric elongated lower wiping part 4, both extending in longitudinal direction along the entire length of said wiper blade 2. In the upper part 3 a central longitudinal groove 5 is formed, in which a longitudinal strip 6 made of spring band steel is fitted (figures 2, 3 and 4). Said strip 6 forms a flexible carrier element for the rubber wiper blade 2, as it were, which is thus biased in a curved position (the curvature in operative position being that of a windscreen to be wiped). Outer ends of said strip 6 are connected on either side of the windscreen wiper device 1 to connecting pieces 7 functioning as clamping members. In this embodiment, the connecting pieces 7 are separate constructional elements, which may be form-locked as well as force-locked to the outer ends of said strip 6 or to the upper part 3. In another preferred variant, said connecting pieces 7 are in one piece with the strip 6 made of spring band steel.

The windscreen wiper device 1 is furthermore built up of a connecting device 8 of plastic or metallic material for an oscillating wiper arm 9. Said connecting device 8 comprises clamping members that are integral therewith, which engage round longitudinal sides of the upper part 3 that face away from each other, as a result of which the connecting device 8 is firmly attached to the unit consisting of the upper part 3 and the strip 6. The oscillating wiper arm 9 is pivotally connected to the connecting device 8 about a pivot axis near one end thereof.

As can be seen from figures 2, 3 and 4, said upper part 3 is provided with downwardly extending arms 10 in one piece therewith, seen in cross-section, thus defining a hollow chamber or space 11, again seen in cross-section. Said hollow chamber 11 extends in longitudinal direction along the entire length of said wiper blade 2, so as to form a channel with two open outer ends. Again referring to figures 2, 3 and 4, said wiping part 4 consists of a wiping lip 12, a neck 13 extending from said wiping lip 12, as well as an enlarged head 14 extending from said neck 13 and having a rectangular cross-section. Said parts 3,4 are slidably connected to each other, wherein said enlarged head 14 of said wiping part 4 is slidably mounted into said hollow channel of said holding part 3. One of said open ends of said channel forms an entrance through which said wiping part 4 as a separate construction element can be slid by hand into said channel until said wiping part 4 is finally retained onto said upper part 3 (the first or holding position). Said open end also acts as an exit through which said wiping part 4 can be slid by hand from the first position until said wiping part 4 as a separate "loose" construction element can be replaced or repaired (the second position). The arms 10 of said upper part 3 engage the enlarged head 14 of said wiping part 4, so as to allow a sliding movement of said wiping part 4 when the screen curvature changes.

Again referring to figures 2, 3 and 4, a spoiler or air deflector 15 is present on a side of said upper part 3 which faces away from said lower wiping part 4. Between said spoiler 15 and said upper part 3 said longitudinal groove 5 is defined having a rectangular cross-section for inserting said longitudinal strip 6 therein.

With reference to figure 2, said spoiler 15 is joined to said upper part 3 through co-extrusion, glueing or the like, wherein said spoiler 15 is made of a softer material than said upper part 3. In other words, said upper part 3 is made of a more rigid material than said spoiler 15. This is all shown in the middle part of figure 2. In the alternative, said upper part 3 is reinforced by a reinforcement 16 making said upper part 3 more rigid than said spoiler 15. The arms 10 may be cut in small sections in order to decrease the rigidity in longitudinal direction, wherein reference is made to the right part of figure 2. Two opposite walls 16 of said groove 5 are made in one piece with said spoiler 15 and are thus also less rigid than said upper part 3.

In figure 3 corresponding parts have been designated with the same reference numerals. As can be seen from figure 3, said upper part 3 is made from a first (rigid) material, wherein said two walls 16 each having a C-shaped cross-section each comprise a part 17 from a second (soft) material facing towards said upper part 3 and a part 18 from a third (rigid) material facing away from said upper part 3. According to the invention said first material is more rigid than said second material, wherein said third material preferably being identical to the first material is more rigid than said second material. Said second material is preferably identical to a fourth material from which the spoiler 15 is made. In the preferred embodiment shown in figure 3 said upper part 3, said walls 16 and said spoiler 15 are made in one piece through co-extrusion.

Figure 4 corresponds to figures 2 and 3, wherein corresponding parts have been designated with the same reference numerals. Said two opposite walls 16 are made from the same (soft) material as the spoiler 15, whereas another wall 19 of said groove 5 is made from the same (rigid) material as said upper part 3. Again, said upper part 3, said walls 16,17 and said spoiler 15 are made in one piece through co-extrusion.

Although the upper part 3 is always more rigid than at least one wall of the groove 5, the upper part 3 preferably comprises transverse grooves to decrease its longitudinal rigidity (see right part of figure 2).

Although not depicted in the figures, it will be clear for a person skilled in the art that the oscillating wiper arm 9 is connected to a mounting head fixed for rotation to a shaft driven by a small motor. In use, the shaft rotates alternately in a clockwise and in a counter-clockwise sense carrying the mounting head into rotation also, which in turn draws the oscillating wiper arm 9 into rotation and by means of the connecting device 8 moves the wiper blade 2.

The invention is not restricted to the embodiments shown, but also extends to other preferred variants falling within the scope of the appended claims. For example, a skilled person would easily understand that the central longitudinal strip 6 of figures 2 and 3 could well be replaced by two longitudinal strips 6 located in correspondingly shaped grooves 5 in said upper part 3. Further, a skilled person would easily realize that the spoiler 15 may also have the form of a wall having no spoiler shape at all, so that there is not a deflector effect in that respect.

## Claims

1. A windscreen wiper device (1) comprising an elastic, elongated carrier element, as well as an elongated wiper blade (2) to be placed in abutment with a windscreen to be wiped, said wiper blade (2) comprising an elongated upper part (3) and an elongated lower wiping part (4) of a flexible material, wherein said upper part (3) is provided with retention means (10) for retaining said lower wiping part (4), wherein said windscreen wiper device (1) further comprises a spoiler (15) at a side of said upper part (3) facing away from said lower wiping part (4), wherein a longitudinal groove (5) for inserting a longitudinal strip (6) of said carrier element therein is defined between said upper part (3) and said spoiler, which windscreen wiper device (1) further comprises a connecting device (8) for an oscillating arm (9), wherein said oscillating arm (9) is pivotally connected to said connecting device (8) about a pivot axis near one end thereof, wherein said upper part (3) is more rigid than at least one wall (16) of said groove (5), wherein said upper part (3) is made from a first material, **characterized in that** said at least one wall (16) comprises a part from a second material facing towards said upper part (3) and a part from a third material facing away from said upper part (3), wherein said first material is more rigid than said second material, and wherein said third material is more rigid than said second material.

2. A windscreen wiper device (1) according to claim 1, wherein said at least one wall (16) and said spoiler (15) are made in one piece.

3. A windscreen wiper device (1) according to claim 1 or 2, wherein said first material and said third material are identical.

4. A windscreen wiper device (1) according to claim 1, 2 or 3, wherein said spoiler (15) is made from a fourth material, and wherein said second material and said fourth material are identical.

5. A windscreen wiper device (1) according to any of the preceding claims 1 through 4, wherein said at least one wall (16) has an at least substantially C-shaped cross-section.

6. A windscreen wiper device according to any of the preceding claims 1 through 4, wherein said upper part (3) is more rigid than at least two opposite walls (16) of said groove (5).

7. A windscreen wiper device according to any of the preceding claims 1 through 6, wherein said upper part (3), said at least one wall (16) and said spoiler (15) are made by co-extrusion.

8. Method for manufacturing a windscreen wiper device (1) comprising an elastic, elongated carrier element, as well as an elongated wiper blade (2) to be placed in abutment with a windscreen to be wiped, said wiper blade (2) comprising an elongated upper part (3) and an elongated lower wiping part (4) of a flexible material, wherein said upper part (3) is provided with retention means (10) for retaining said lower wiping part (4), wherein said windscreen wiper device (1) further comprises a spoiler (15) at a side of said upper part (3) facing away from said lower wiping part (4), wherein a longitudinal groove (5) for inserting a longitudinal strip (6) of said carrier element therein is defined between said upper part (3) and said spoiler, which windscreen wiper device (1) further comprises a connecting device (8) for an oscillating arm (9), wherein said oscillating arm (9) is pivotally connected to said connecting device (8) about a pivot axis near one end thereof, wherein said upper part (3) is made more rigid than at least one wall (16) of said groove (5), wherein said upper part (3) is made from a first material, **characterized in that** said at least one wall (16) comprises a part from a second material facing towards said upper part (3) and a part from a third material facing away from said upper part (3), wherein said first material is more rigid than said second material, and wherein said third material is more rigid than said second material.

## Patentansprüche

1. Windschutzscheibenwischervorrichtung (1), umfassend
ein elastisches längliches Trägerelement, wie auch ein längliches Wischerblatt (2), das an einer zu wischenden Windschutzscheibe anliegend platziert werden soll,
wobei das Wischerblatt (2) ein längliches oberes Teil (3) und ein längliches unteres Wischteil (4) aus einem flexiblen Material umfasst,
wobei das obere Teil (3) mit Haltemitteln (10) versehen ist, um den unteren Wischteil (4) zu halten,
wobei die Windschutzscheibenwischervorrichtung (1) weiter einen Spoiler (15) an einer Seite des oberen Teils (3) umfasst, die von dem unteren Wischteil (4) weg weist, wobei eine Längsrille (5) zum Einschieben eines Längsstreifens (6) des Trägerelements darin zwischen dem oberen Teil (3) und dem Spoiler definiert ist, wobei die Windschutzscheibenwischervorrichtung (1) weiter eine Verbindungsvorrichtung (8) für einen sich hin und her bewegenden Arm (9) umfasst, wobei der sich hin und her bewegende Arm (9) nahe einem Ende davon um eine Schwenkachse schwenkbar mit der Verbindungsvorrichtung (8) verbunden ist,
wobei das obere Teil (3) steifer ist als mindestens eine Wand (16) der Rille (5),
wobei das obere Teil (3) aus einem ersten Material gefertigt ist,
**dadurch gekennzeichnet, dass**
die mindestens eine Wand (16) ein Teil aus einem zweiten Material, das in Richtung des oberen Teils (3) weist, und ein Teil aus einem dritten Material umfasst, das von dem oberen Teil (3) weg weist,
wobei das erste Material steifer ist als das zweite Material, und
wobei das dritte Material steifer ist als das zweite Material.

2. Scheibenwischervorrichtung (1) gemäß Anspruch 1, wobei die mindestens eine Wand (16) und der Spoiler (15) einstückig gefertigt sind.

3. Scheibenwischervorrichtung (1) gemäß Anspruch 1 oder 2, wobei das erste Material und das dritte Material identisch sind.

4. Scheibenwischervorrichtung (1) gemäß Anspruch 1, 2 oder 3, wobei der Spoiler (15) aus einem vierten Material gefertigt ist, und
wobei das zweite Material und das vierte Material identisch sind.

5. Scheibenwischervorrichtung (1) gemäß einem der vorstehenden Ansprüche 1 bis 4, wobei die mindestens eine Wand (16) einen zumindest im Wesentlichen C-förmigen Querschnitt aufweist.

6. Scheibenwischervorrichtung (1) gemäß einem der vorstehenden Ansprüche 1 bis 4, wobei das obere Teil (3) steifer ist als mindestens zwei gegenüberliegende Wände (16) der Rille (5).

7. Scheibenwischervorrichtung (1) gemäß einem der vorstehenden Ansprüche 1 bis 6, wobei das obere Teil (3), die mindestens eine Wand (16) und der Spoiler (15) durch Coextrusion gefertigt sind.

8. Verfahren zum Herstellen einer Windschutzscheibenwischervorrichtung (1), umfassend
ein elastisches längliches Trägerelement, wie auch ein längliches Wischerblatt (2), das an einer zu wischenden Windschutzscheibe anliegend platziert werden soll,
wobei das Wischerblatt (2) ein längliches oberes Teil (3) und ein längliches unteres Wischteil (4) aus einem flexiblen Material umfasst,
wobei das obere Teil (3) mit Haltemitteln (10) versehen ist, um das untere Wischteil (4) zu halten,
wobei die Windschutzscheibenwischervorrichtung (1) weiter einen Spoiler (15) an einer Seite des oberen Teils (3) umfasst, die von dem unteren Wischteil (4) weg weist, wobei eine Längsrille (5) zum Einschieben eines Längsstreifens (6) des Trägerelements darin zwischen dem oberen Teil (3) und dem Spoiler definiert ist,
wobei die Windschutzscheibenwischervorrichtung (1) weiter eine Verbindungsvorrichtung (8) für einen sich hin und her bewegenden Arm (9) umfasst, wobei der sich hin und her bewegende Arm (9) nahe einem Ende davon um eine Schwenkachse schwenkbar mit der Verbindungsvorrichtung (8) verbunden ist,
wobei der obere Teil (3) steifer gefertigt ist als mindestens eine Wand (16) der Rille (5),
wobei der obere Teil (3) aus einem ersten Material gefertigt ist,
**dadurch gekennzeichnet, dass**
die mindestens eine Wand (16) ein Teil aus einem zweiten Material, das in Richtung des oberen Teils (3) weist, und ein Teil aus einem dritten Material umfasst, das von dem oberen Teil (3) weg weist,
wobei das erste Material steifer ist als das zweite Material, und
wobei das dritte Material steifer ist als das zweite Material.

## Revendications

1. Dispositif d'essuie-glace (1) comprenant un élément porteur allongé élastique, ainsi qu'un balai d'essuie-glace (2) allongé à placer en butée contre un pare-brise à essuyer, ledit balai d'essuie-glace (2) comprenant une partie supérieure (3) allongée et une partie d'essuyage (4) inférieure allongée fabriquée à partir d'un matériau souple, dans lequel ladite partie supérieure (3) est fournie de moyens de retenue (10) destinés à retenir ladite partie d'essuyage (4) inférieure, dans lequel ledit dispositif d'essuie-glace (1) comprend en outre un déflecteur (15) au niveau d'un côté de ladite partie supérieure (3) qui fait face en s'éloignant de ladite partie d'essuyage (4) inférieure, dans lequel une rainure longitudinale (5) destinée à insérer à l'intérieur une bande longitudinale (6) dudit élément porteur est définie entre ladite partie supérieure (3) et ledit déflecteur, lequel dispositif d'essuie-glace (1) comprend en outre un dispositif de raccord (8) d'un bras oscillant (9), dans lequel ledit bras oscillant (9) est relié de manière pivotante audit dispositif de raccord (8) autour d'un axe de pivot à proximité d'une extrémité de celui-ci, dans lequel ladite partie supérieure (3) est plus rigide qu'au moins une paroi (16) de ladite rainure (5), dans lequel ladite partie supérieure (3) est fabriquée à partir d'un premier matériau, **caractérisé en ce que** ladite au moins une paroi (16) comprend une partie fabriquée à partir d'un deuxième matériau qui fait face vers ladite partie supérieure (3), et une partie fabriquée à partir d'un troisième matériau qui fait face en s'éloignant de ladite partie supérieure (3), dans lequel ledit premier matériau est plus rigide que ledit deuxième matériau, et dans lequel ledit troisième matériau est plus rigide que ledit deuxième matériau.

2. Dispositif d'essuie-glace (1) selon la revendication 1, dans lequel ladite au moins une paroi (16) et ledit déflecteur (15) sont fabriqués d'une seule pièce.

3. Dispositif d'essuie-glace (1) selon la revendication 1 ou 2, dans lequel ledit premier matériau et ledit troisième matériau sont identiques.

4. Dispositif d'essuie-glace (1) selon l'une quelconque des revendications 1 à 3, dans lequel ledit déflecteur (15) est fabriqué à partir d'un quatrième matériau, et dans lequel ledit deuxième matériau et ledit quatrième matériau sont identiques.

5. Dispositif d'essuie-glace (1) selon l'une quelconque des revendications 1 à 4, dans lequel ladite au moins une paroi (16) présente au moins une section transversale essentiellement en forme de C.

6. Dispositif d'essuie-glace selon l'une quelconque des revendications 1 à 4, dans lequel ladite partie supérieure (3) est plus rigide qu'au moins deux parois opposées (16) de ladite rainure (5).

7. Dispositif d'essuie-glace selon l'une quelconque des revendications 1 à 6, dans lequel ladite partie supérieure (3), ladite au moins une paroi (16) et ledit déflecteur (15) sont fabriqués par coextrusion.

8. Procédé destiné à fabriquer un dispositif d'essuie-glace (1) qui comprend un élément porteur allongé élastique, ainsi qu'un balai d'essuie-glace (2) allongé à placer en butée contre un pare-brise à essuyer, ledit balai d'essuie-glace (2) comprenant une partie supérieure (3) allongée et une partie d'essuyage (4) inférieure allongée fabriquée à partir d'un matériau souple, dans lequel ladite partie supérieure (3) est fournie de moyens de retenue (10) destinés à retenir ladite partie d'essuyage (4) inférieure, dans lequel ledit dispositif d'essuie-glace (1) comprend en outre un déflecteur (15) au niveau d'un côté de ladite partie supérieure (3) qui fait face en s'éloignant de ladite partie d'essuyage (4) inférieure, dans lequel une rainure longitudinale (5) destinée à insérer à l'intérieur une bande longitudinale (6) dudit élément porteur est définie entre ladite partie supérieure (3) et ledit déflecteur, lequel dispositif d'essuie-glace (1) comprend en outre un dispositif de raccord (8) d'un bras oscillant (9), dans lequel ledit bras oscillant (9) est relié de manière pivotante audit dispositif de raccord (8) autour d'un axe de pivot à proximité d'une extrémité de celui-ci, dans lequel ladite partie supérieure (3) est rendue plus rigide qu'au moins une paroi (16) de ladite rainure (5), dans lequel ladite partie supérieure (3) est fabriquée à partir d'un premier matériau, **caractérisé en ce que** ladite au moins une paroi (16) comprend une partie fabriquée à partir d'un deuxième matériau qui fait face vers ladite partie supérieure (3), et une partie fabriquée à partir d'un troisième matériau qui fait face en s'éloignant de ladite partie supérieure (3), dans lequel ledit premier matériau est plus rigide que ledit deuxième matériau, et dans lequel ledit troisième matériau est plus rigide que ledit deuxième matériau.
